# EUROPÄISCHE PATENTSCHRIFT

(11) **EP 0 487 807 B1**
(45) Veröffentlichungstag und Bekanntmachung des Hinweises auf die Patenterteilung: **02.03.1994**
(21) Anmeldenummer: 90810936.6
(22) Anmeldetag: 30.11.1990
(51) Int. Cl.: E04F 13/14, B32B 7/02, E04F 15/08, E04F 15/02, E01C 5/06, E01C 5/04, B44C 3/12

(54) **Elemente aus Beton oder Keramik**
Concrete or ceramic elements
Eléments en béton ou en céramique

(43) Veröffentlichungstag der Anmeldung: 03.06.1992
(73) Patentinhaber: Scheiwiller, René, CH-6052 Hergiswil (CH)
(72) Erfinder: Scheiwiller, René, CH-6052 Hergiswil (CH)
(74) Vertreter: AMMANN PATENTANWAELTE AG BERN

(56) Entgegenhaltungen:
- DE-A- 2 448 312
- DE-A- 3 409 114
- DE-C- 100 731
- DE-U- 8 901 920
- FR-A- 724 248
- US-A- 4 925 338

## Beschreibung

Die vorliegende Erfindung bezieht sich auf Elemente aus Beton oder Keramik, insbesondere zur Erstellung von Boden- oder Wandbelägen. Es sind eine grosse Anzahl von Pflastersteinen einerseits und Keramikplatten andererseits bekannt, die dekorative Elemente enthalten, respektive derart geformt sind, dass beim Verlegen gewisse Muster entstehen können. In der Regel sind jedoch diese Elemente, falls nicht allerkleinste Mosaiksteinchen gewählt werden, in ihrer Anwendung zu beschränkt, um beliebig irgendwelche Figuren, beispielsweise auch sämtliche Buchstaben, Zahlen oder bekannte Zeichen bilden zu können.

Aus der vorangemeldeten EP-A-415 093, die als Europäische Anmeldung und deren Inhalt als Stand der Technik gemäß Art. 54(3) und (4) EPÜ gilt, ist ein Fünfeck-Stein bekannt, mit dem einige Muster verlegt werden können, mit dem jedoch eine ganze Anzahl von Figuren, Zahlen oder Zeichen nicht verlegt werden können, ohne einen Teil des Steines zu schneiden. Dieser Fünfeckstein besteht aus vier Quadraten, wobei die Diagonale des Eckquadrats absgeschnitten ist.

Es ist demgegenüber ein Ziel der vorliegenden Erfindung relativ wenige Elemente anzugeben, die eine weitaus grössere Vielzahl von Verlegemustern erlauben, ohne die Steine oder Platten schneiden oder anpassen zu müssen und die es auch gestatten, andere, einfachere Formen, wie quadratische, recht- oder sechseckige Elemente mitzuverwenden.

Dies ist insbesondere auch dann vorteilhaft, falls die Elemente als Trogsteine ausgebildet sind. Dieses Ziel wird mit den in den Patentansprüchen beschriebenen Elementen erreicht.

Die Erfindung wird im folgenden anhand einer Zeichnung von Ausführungsbeispielen näher erläutert. Es zeigen:
Die Figuren 1 - 8 sechs verschiedene Elemente,
die Figuren 9 und 10 zwei Verlegebeispiele mit den vorhergehenden Elementen,
die Figuren 11 - 20 weitere verschiedene Elemente,
die Figuren 21 - 27 weitere Verlegebeispiele mit den vorhergehenden Elementen,
Figur 28 eines der Elemente als Pflasterstein,
Figur 29 einen Schnitt des Steines gemäss Figur 28 und
die Figuren 30 und 31 zwei als Trogsteine ausgebildete Elemente.

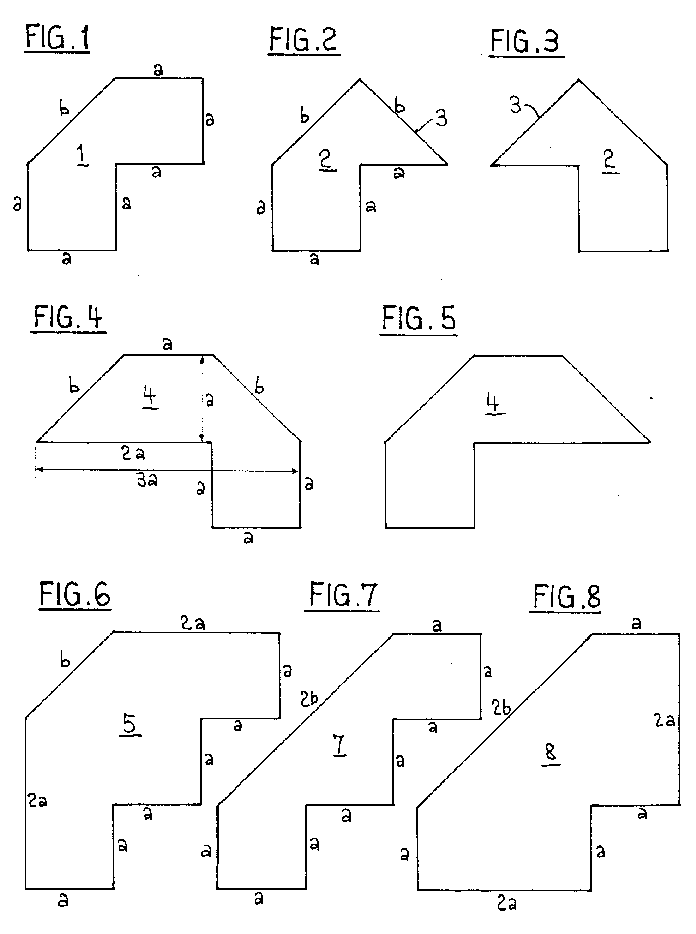

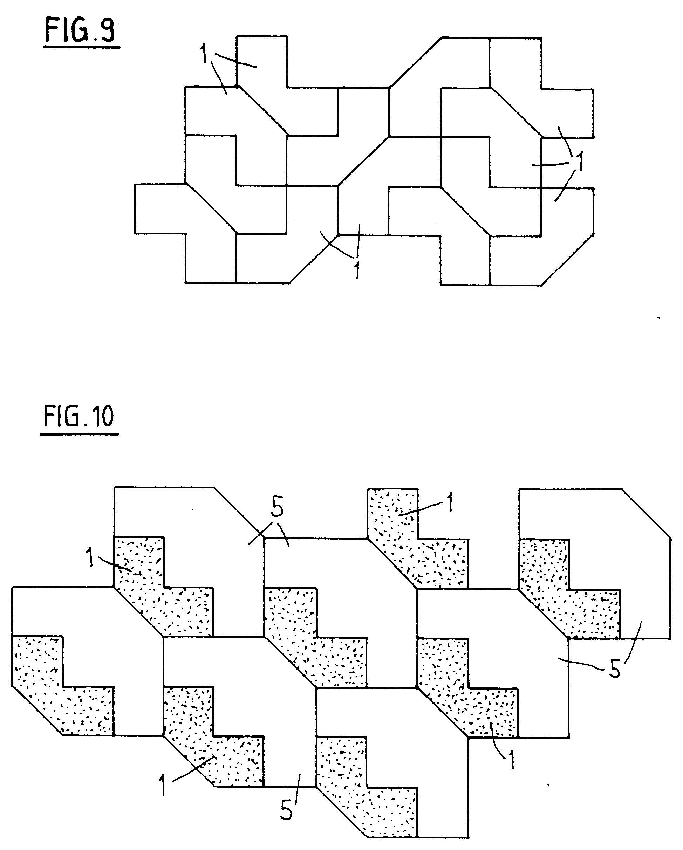

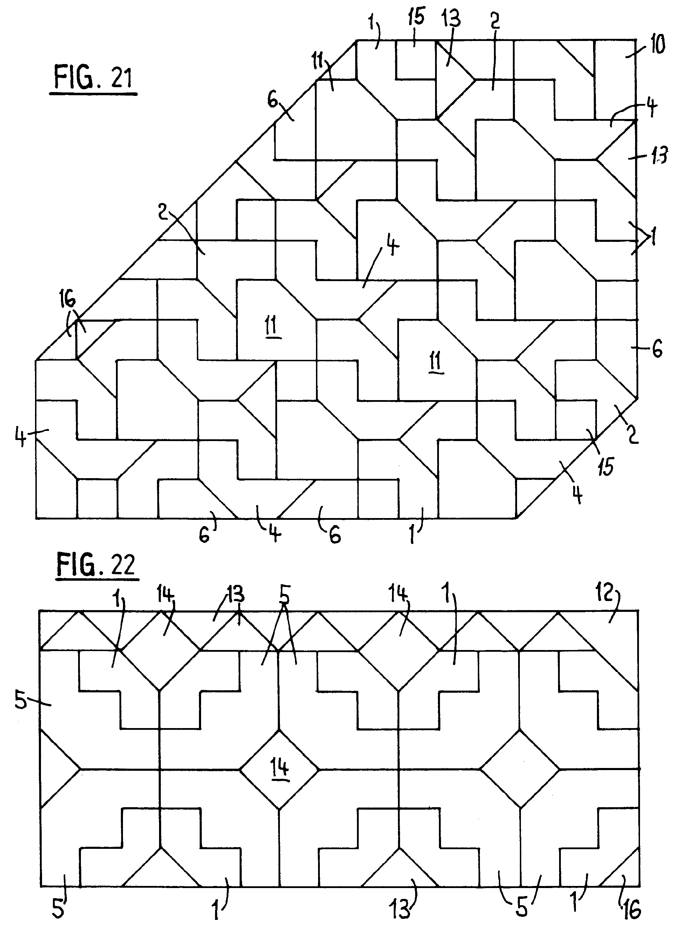

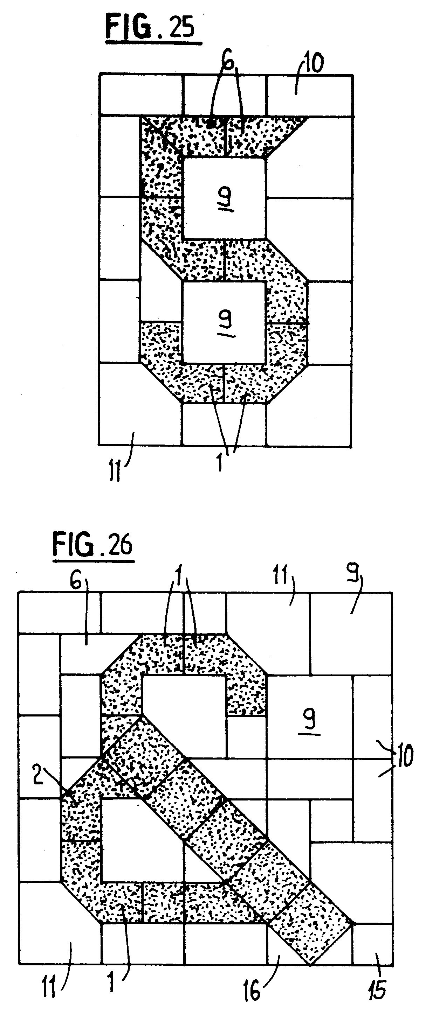

In den Figuren 1 - 5 sind drei Elemente dargestellt, mit denen bereits eine Vielfalt von Formen verlegbar sind und die, zusammen mit den Elementen gemäss den Fiauren 17 oder 18 sowie 20 es ermöglichen, sämtliche Buchstaben, ob gross oder klein geschrieben, sowie Zahlen und gebräuchliche Zeichen zusammenzusetzen und eine geradlinige Umrandung zu erzeugen ohne ein einziges Element verändern zu müssen. Figur 1 zeigt ein erstes Element 1, das aus drei über Eck angeordneten Quadraten mit der Seitenlänge a zusammengesetzt ist, wobei die Mittelkante entlang der Diagonale des Mittelquadrates abgeschnitten ist und diese Seite b die Länge von a 2√aufweist. In den Figuren 2 und 3 ist ein zweites Element 2 dargestellt, das aus Figur 1 hervorgeht, wobei zusätzlich eine weitere Kante gemäss einer Diagonalen eines Quadrates abgeschrägt ist, um eine Seite 3 zu ergeben, dessen Länge b ebenfalls = a√2 ist. Das Element in Figur 3 ist das gleiche wie in Figur 2, nur spiegelbildlich dargestellt. In den Figuren 4 und 5 ist ein drittes Element 4 dargestellt, das, ebenfalls von Element 1 in Figur 1 ausgehend an einer Seite angesetzt ein halbes Quadrat der Seitenlänge a aufweist, so dass die Gesamtlänge 3a und die Gesamthöhe 2a beträgt. Das heisst, das Element 4 besteht aus einem gleichseitigen Trapez mit der Basislänge 3a und der Länge der kleineren parallelen Seite a und einem einseitig a angesetzten Quadrat der Seitenlänge a. In den Figuren 9 und 10 ist dargestellt, wie die Elemente 1 und 5 verschiedentlich zusammengesetzt werden können, wobei aus den Figuren 21-27 hervorgeht, dass diese auch mit anderen Elementen kombinierbar sind und jedesmal durch einfache geometrische Elemente wie Rechtecke, Quadrate oder halbe Quadrate, selbstverständlich mit der Seitenlänge a, 2a oder 3a, mit geradlinigen Abschlüssen verlegt werden können.

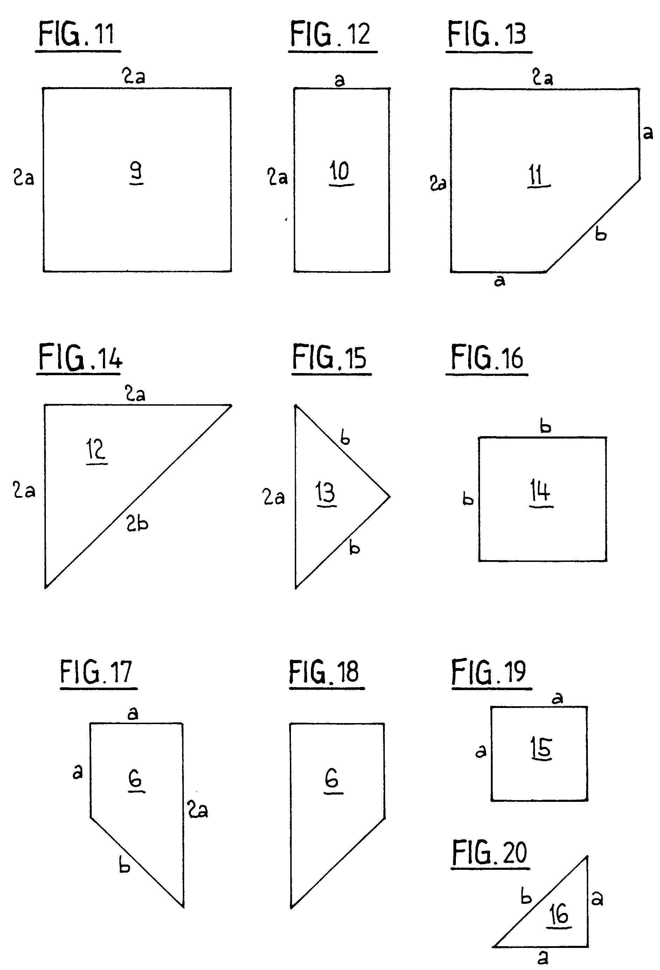

In Figur 6 ist ein viertes Element 5 dargestellt, das aus dem ersten Element 1 mit drei angesetzten Quadraten besteht, die an den Seiten angesetzt sind, die nicht an die abgeschrägte Seite b grenzen. Das sechste Element 7 gemäss Figur 7 entspricht Element 1 und zusätzlich ein fünftes Element 6 gemäss Figur 20 oder 21, während das siebte Element 8 gemäss Figur 8 dem Element 7 in Figur 7 plus zwei angefügten Quadraten entspricht. In den Figuren 12 und 13 sind Muster mit dem Element 5 gemäss Figur 6 und den Elementen 5 und 1 dargestellt. Auch die gezeichneten Ausschnitte lassen sich leicht mit den bisher bekannten Elementen sowie einfachen geometrischen Elementen ergänzen, falls eine geradlinige Umrandung erwünscht ist.

In Figur 11 ist ein Quadrat 9 mit der Seitenlänge 2a und in Figure 12 ein Rechteck 10 mit den Seitenlängen a x 2a dargestellt, während das achte Element 11 von Figur 13 dem Quadrat 9 von Figur 11 minus einem halben Quadrat mit Seitenlänge a entspricht und das gleichschenklige Dreieck 12 in Figur 14 die Hälfte des Quadrates 9 von Figur 11 und das gleichschenklige Dreieck 13 von Figur 15 einem Viertel des Quadrates von Figur 11 entspricht. Das Quadrat 14 von Figur 16 hat die Seitenlänge b = a√2, während das Quadrat 15 von Figur 19 die Seitenlänge a und das gleichschenklige Dreieck 16 in Figur 20 der Hälfte des Quadrates von Figur 19 entspricht. Das fünfte Element 6 entspricht dem Quadrat 15 mit der Seitenlänge a plus dem halben Quadrat 16 gemäss Figur 20.

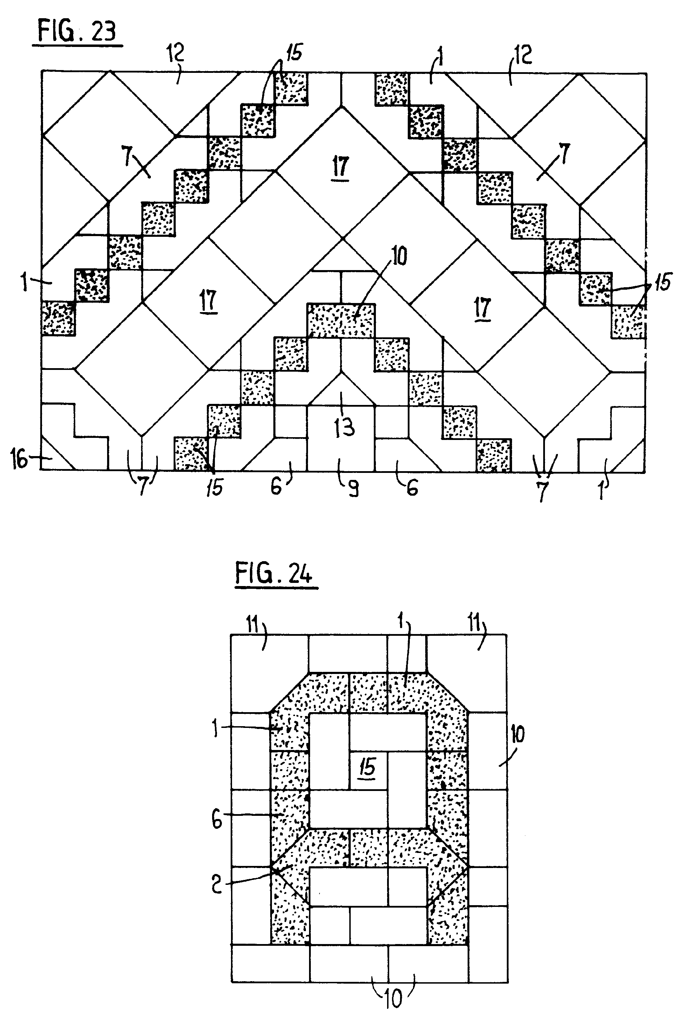

Die Figuren 21 bis 27 verdeutlichen, dass mit den acht Elementen sowie den einfachen geometrischen Formen, sämtliche Elemente mit dem Modul a, eine grosse Vielfalt von Formen und Figuren zusammengesetzt werden kann und jedesmal erreicht werden kann, dass eine geradlinige Umrandung, auch mit schrägen Seiten wie in Figur 21 erzielt wird. Dies ermöglicht beispielsweise, siehe Figur 23, Normplatten 17 einzubauen unter der Voraussetzung natürlich, dass sie mit der Strecke a kompatibel sind.

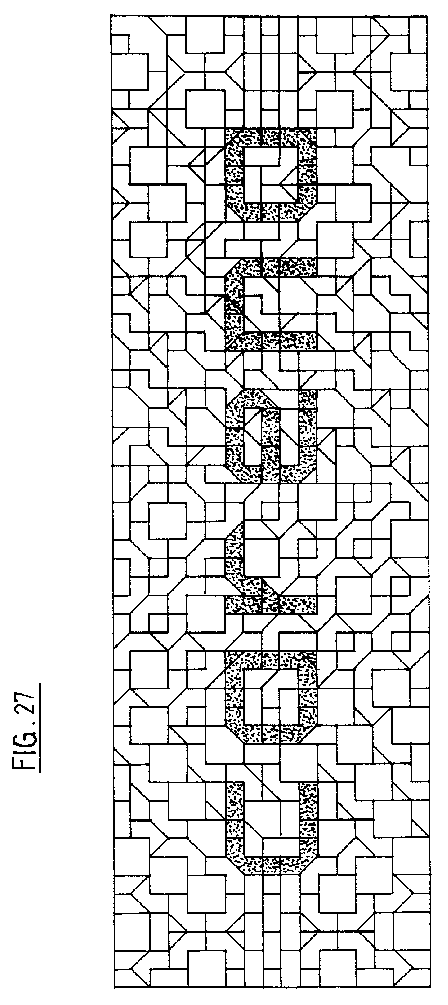

In den Figuren 24-26 sind zur Auswahl ein Buchstabe, eine Zahl und ein Zeichen dargestellt, um anzudeuten, dass sämtliche Gross- und Kleinbuchstaben, alle Zahlwörter sowie alle gebräuchlichen Zeichen mit den beschriebenen Elementen zusammengesetzt und hervorgehoben werden können und dass ein geradliniger Abschluss erreicht werden kann, wobei kein einziges Element irgendwie verändert, das heisst geschnitten, verkleinert oder sonstwie angepasst werden muss. In Figur 27 ist dargestellt, wie ein ganzer Schriftzug mit diesen Elementen eingelegt werden kann und wie ein beliebiges Muster erstellt und mit geradem Abschluss zusammengesetzt werden kann. Dabei ist es selbstverständlich, dass Elemente verschieden eingefärbt sein können, um Figuren besser hervorzuheben.

Die Elemente der Figuren 1 - 27 sind flächenhaft, das heisst ohne dritte Dimension dargestellt und es ist ersichtlich, dass es sich dabei sowohl um Platten, Pflastersteine als auch um dünne Keramikplatten handeln kann, die geeignet sind, als Pflastersteinböden oder Keramikböden oder als Wandbeläge zu dienen. Es ist selbstverständlich auch möglich, diese, respektive gewisse Elemente davon, derart dick zu gestalten, dass sie auch als Treppen- oder Palisadenelemente verwendbar sind.

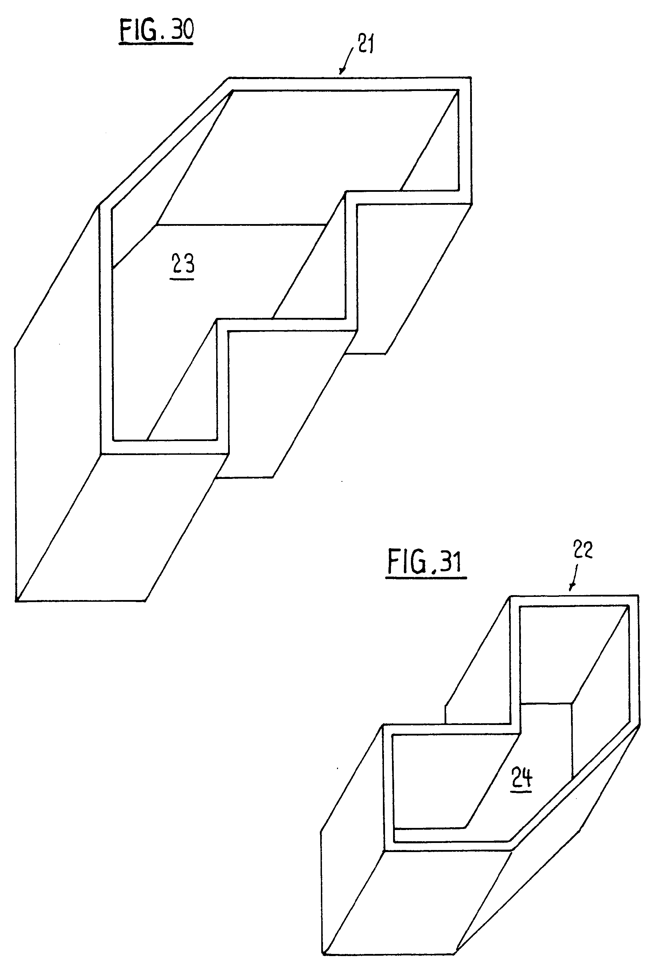

In den Figuren 30 und 31 ist beispielshaft gezeigt, wie die Elemente 5 und 1 ferner als Trogsteine 21, bzw. 22 ausgebildet sein können. Selbstverständlich können auch die anderen Elemente als Trogsteine ausgebildet sein.

Diese Trogsteine können als Gruppen gestaltet werden, die dann auch durch andere, vorgehend beschriebeine Elemente ergänzt werden können. Die Böden 23, bzw. 24 können einstückig mit den Trogkörpern oder auch als gesonderte Teile gefertigt sein.

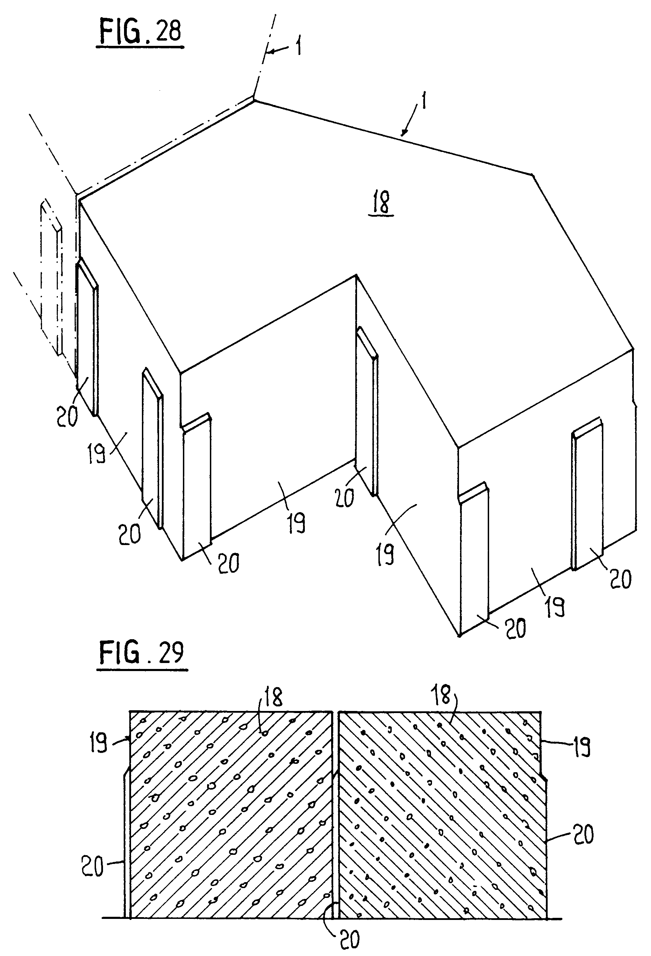

In den Figuren 28 und 29 ist dargestellt, wie man beispielsweise das erste Element 1 als Pflasterstein 18 verwenden kann, dessen Seitenflächen 19 Abstandnocken 20 aufweisen, die sich nicht über die ganze Höhe erstrekken. Dabei sind die Abstandsnocken auf jeder Seite derart angeordnet, dass sich beim Aneinanderfügen der Steine eine Verzahnung und eine geringe Fugenbreite ergibt, die den Gehkomfort erhöht.

## Patentansprüche

1. Elemente aus Beton oder Keramik, insbesondere zur Erstellung von Boden- oder Wandbelägen, wobei alle Elemente (1, 2, 4 - 16) auf der Basis einer Einheitslänge (a) modular aufgebaut sind und darunter ein erstes Element (1) vorhanden ist, das lediglich drei übereck angeordnete Quadrate mit der modularen Seitenlänge (a) aufweist, die Quadrate alle entlang der gesamten Länge zumindest einer ihrer Seiten aneinander angrenzen und wovon die Diagonale (b) des Eckquadrates abgeschnitten ist.

2. Elemente mit einem zweiten Element (2) nach Anspruch 1, dadurch gekennzeichnet, dass es zusätzlich zum ersten Element (1) eine weitere abgeschnittene Diagonale (3) aufweist und dass es auch in spiegelbildlicher Ausführung vorhanden ist.

3. Elemente nach Anspruch 1 mit einem dritten Element (4), dadurch gekennzeichnet, dass es, aus dem ersten Element (1) hervorgehend, zusätzlich ein an einer geraden Seite angesetztes halbes Quadrat der Einheitslänge (a) aufweist und auch in spiegelbildlicher Ausführung vorhanden ist.

4. Elemente nach Anspruch 1 mit einem vierten Element (5), dadurch gekennzeichnet, dass es, aus dem ersten Element (1) hervorgehend, zusätzlich an den drei Seiten, die nicht an die abgeschrägte Seite (b) grenzen, je ein Quadrat der Einheitslänge (a) aufweist (Figur 6).

5. Elemente nach Anspruch 1 mit einem fünften Element (6), dadurch gekennzeichnet, dass es aus einem Quadrat der Einheitsseitenlänge (a) mit einem angefügten halben Quadrat besteht (Figuren 17 und 18) und auch in spiegelbildlicher Ausführung vorhanden ist.

6. Elemente nach Anspruch 1 mit einem sechsten Element (7), dadurch gekennzeichnet, dass es aus dem ersten Element (1) mit angefügtem fünftem Element (6) gemäß Anspruch 5 besteht (Figur 7).

7. Elemente nach Anspruch 1 mit einem siebenten Element (8), dadurch gekennzeichnet, dass es, aus dem sechsten Element (7 ) gemäß Anspruch 6 hervorgehend, zusätzlich zwei Quadrate an den der abgeschrägten Seite (2b) gegenüberliegenden geraden Seiten aufweist (Figur 8).

8. Elemente nach Anspruch 1 mit einem achten Element (11), dadurch gekennzeichnet, dass es aus einem Quadrat der doppelten Einheitsseitenlänge (2a) mit einer abgeschnittenen Diagonale (b = a√2) in einer Ecke besteht (Figur 13).

9. Elemente nach einem der Ansprüche 1 bis 8, dadurch gekennzeichnet, dass ferner vorhanden sind quadratische Elemente (15, 9, 14) mit der einfachen Einheitsseitenlänge (a), der doppelten Einheitsseitenlänge (2a) und der √a-fachen Einheitslänge (b = a√2) und deren diagonal abgeschnittenen Hälften (16, 12, 13), sowie ein Rechteck (10) mit der doppelten Einheitsseitenlänge (2a) und Einheitsseitenlänge (a).

10. Elemente nach einem der Ansprüche 1 bis 9, dadurch gekennzeichnet, dass sie als Pflastersteine ausgebildet sind.

11. Pflastersteine (18) nach Anspruch 10, dadurch gekennzeichnet, dass sie an ihren lotrechten Seiten (19) Abstandsnocken (20) aufweisen, die sich von der Unterseite aus gesehen nicht über die ganze Höhe erstrecken und die derart angeordnet sind, dass sich beim Aneinanderfügen der Pflastersteine eine Verzahnung ergibt.

12. Elemente nach einem der Ansprüche 1 bis 9, dadurch gekennzeichnet, dass sie als dünne Keramikplatten ausgebildet sind.

13. Elemente nach einem der Ansprüche 1 bis 9, dadurch gekennzeichnet, dass sie als Trogsteine (21, 22) ausgebildet sind, deren Böden (23, 24) entweder einstückig mit dem Trogkörper oder als gesonderte Teile hergestellt sind.

## Claims

1. Concrete or ceramics elements, in particular for the creation of floor or wall coverings, all of said elements (1, 2, 4-16) being designed in a modular manner on the basis of a unitary length (a), and a first element being provided which merely comprises three squares having said modular side length (a) and forming an angle, all of said squares adjoining along the entire length of at least one of their sides, and the corner square being cut off along its diagonal (b).

2. Elements comprising a second element (2) according to claim 1, characterised in that in addition to said first element (1), said second element has another cut diagonal (3), and in that it is also provided in its mirror-inverted form.

3. Elements according to claim 1, comprising a third element (4), characterised in that it is derived from said first element (1) by addition of another half-square having unitary side lengths (a) on one straight side and is also provided in its mirror-inverted form.

4. Elements according to claim 1, comprising a fourth element (5), characterised in that it is derived from said first element (1) by addition of another square with unitary side lengths (a) on each of the three sides which are not adjacent said slanting side (b) (Fig. 6).

5. Elements according to claim 1, comprising a fifth element (6), characterised in that it consists of a square with unitary side lengths (a) with an added half-square (Figs. 17 and 18) and is also provided in its mirror-inverted form.

6. Elements according to claim 1, comprising a sixth element (7), characterised in that it consists of said first element (1) with an added fifth element (6) according to claim 5 (Fig. 7).

7. Elements according to claim 1, comprising a seventh element (8), characterised in that it is derived from said sixth element (7) according to claim 6 by addition of two squares on the straight sides opposite said slanting side (2b) (Fig. 8).

8. Elements according to claim 1, comprising an eighth element (11), characterised in that it is composed of a square with double unitary side lengths (2a) and a cut diagonal (b = a√2) in one corner (Fig. 13).

9. Elements according to any one of claims 1 to 8, characterised in that square elements (15, 9, 14) with unitary side lengths (a), with double unitary side lengths (2a), and with side lengths (b = a√2) equal to the unitary side length multiplied by √2, and the diagonally cut halves thereof (16, 12, 13), as well as a rectangle (10) with double unitary side lengths (2a) and unitary side lengths (a) are further provided.

10. Elements according to any one of claims 1 to 9, characterised in that they are designed as paving stones.

11. Paving stones (18) according to claim 10, characterised in that their perpendicular sides (19) are provided with spacing projections (20) which extend from the underside but not over the entire height and which are arranged in such a manner that an indentation results when said paving stones are juxtaposed.

12. Elements according to any one of claims 1 to 9, characterised in that they are desigened as thin ceramics tiles.

13. Elements according to any one of claims 1 to 9, characterised in that they are designed as trough stones whose bottoms (23, 24) are either manufactured in one piece with the trough body or as separate parts.

## Revendications

1. Eléments en béton ou céramique, en particulier pour la création de revêtements du sol ou de murs, tous les éléments (1, 2, 4 - 16) étant conçus de façon modulaire sur la base d'une longueur unitaire (a), et lesdits éléments comprenant un premier élément (1) qui présente seulement trois carrés aux côtés de longueur modulaire (a) qui forment un angle, lesdits carrés se touchant chacun tout le long d'au moins un de leurs côtés, et le carré d'angle étant coupé le long de sa diagonale (b).

2. Eléments comprenant un deuxième élément (2) selon la revendication 1, caractérisé en ce qu'il présente, en plus du premier élément (1), une autre diagonale (3) coupée, et qu'il en existe également l'exécution symétrique inversée.

3. Eléments selon la revendication 1, comprenant un troisième élément (4), caractérisé en ce qu'il est dérivé du premier élément (1), qu'il présente en plus un demi-carré aux côtés unitaires (a), ajouté sur l'un des côtés droits, et qu'il en existe également l'exécution symétrique inversée.

4. Eléments selon la revendication 1, comprenant un quatrième élément (5), caractérisé en ce qu'il est dérivé du premier élément (1) et présente en plus un carré aux côtés unitaires (a) sur chacun des trois côtés qui ne sont pas adjacents au côté oblique (b).

5. Eléments selon la revendication 1, comprenant un cinquième élément (6), caractérisé en ce qu'il consiste d'un carré aux côtés unitaires (a) avec un demi-carré ajouté (figures 17 et 18), et qu'il en existe également l'exécution symétrique inversée.

6. Eléments selon la revendication 1, comprenant un sixième élément (7), caractérisé en ce qu'il consiste du premier élément (1) avec le cinquième élément (6) selon la revendication 5 ajouté (figure 7).

7. Eléments selon la revendication 1, comprenant un septième élément (8), caractérisé en ce qu'il est dérivé du sixième élément (7) selon la revendication 6 et présente en plus deux carrés sur les côtés droits opposés au côté oblique (2b) (figure 8).

8. Eléments selon la revendication 1, comprenant un huitième élément (11), caractérisé en ce qu'il consiste d'un carré aux côtés de longueur unitaire double (2a) avec une diagonale (b = a√2) coupée dans un coin (figure 13).

9. Eléments selon l'une quelconque des revendications 1 à 8, caractérisés en ce qu'il existe en plus des éléments carrés (15, 9, 14) aux côtés de longueur unitaire (a), de longueur unitaire double (2a) et de longueur unitaire multipliée par √2 (b = a√2) et leurs moitiés diagonalement coupées (16, 12, 13), ainsi qu'un rectangle (10) aux côtés de longueur unitaire double (2a) et de longueur unitaire (a).

10. Eléments selon l'une quelconque des revendications 1 à 9, caractérisés en ce qu'ils sont en forme de pavés.

11. Pavés (18) selon la revendication 10, caractérisés en ce qu'il présentent sur leurs côtés perpendiculaires (19) des ergots de distance (20) qui s'étendent depuis le bas mais non pas sur la hauteur entière, et qui sont disposés de telle sorte qu'il en résulte un endentement quand les pavés sont juxtaposés.

12. Eléments selon l'une quelconque des revendications 1 à 9, caractérisés en ce qu'ils sont en forme de dalles céramiques minces.

13. Eléments selon l'une quelconque des revendications 1 à 9, caractérisés en ce qu'ils sont en forme de bacs (21, 22) dont les fonds (23, 24) sont solidaires avec le corps du bac ou sont fabriqués séparément.
